Europäisches Patentamt

European Patent Office

Office européen des brevets

(11) Publication number: 0 081 063
B1

# EUROPEAN PATENT SPECIFICATION

(45) Date of publication of patent specification: 10.07.85

(21) Application number: 82109350.7

(22) Date of filing: 08.10.82

(51) Int. Cl.⁴: C 01 B 15/08

(54) Method for producing sodium persulfate.

(30) Priority: 10.11.81 US 320145

(43) Date of publication of application:
15.06.83 Bulletin 83/24

(45) Publication of the grant of the patent:
10.07.85 Bulletin 85/28

(84) Designated Contracting States:
AT BE CH DE FR GB IT LI LU NL SE

(56) References cited:
FR-A-1 493 723
US-A-2 899 272
US-A-3 716 629
US-A-3 954 952

The file contains technical information
submitted after the application was filed and
not included in this specification

(73) Proprietor: FMC Corporation
2000 Market Street
Philadelphia Pennsylvania 19103 (US)

(72) Inventor: McCarthy, Michael Joseph
14 Lannigan Drive
Lawrenceville New Jersey 08648 (US)
Inventor: Schillaci, Phillip Vincent
226 Kaymar Drive
Tonawanda New York (US)

(74) Representative: Barz, Peter, Dr. et al
Patentanwälte Dr. V. Schmied-Kowarzik Dipl.-
Ing. G. Dannenberg Dr. P. Weinhold Dr. D. Gudel
Dipl.-Ing. S. Schubert Dr. P. Barz
Siegfriedstrasse 8
D-8000 München 40 (DE)

Courier Press, Leamington Spa, England.

## Description

This invention relates to a method for separately crystallizing sodium persulfate and sodium sulfate decahydrate from a mother liquor regenerated with ammonium persulfate and sodium hydroxide or sodium carbonate.

Sodium peroxydisulfate (commonly called sodium persulfate) is a commercial chemical particularly useful for etching printed circuits, for cleaning copper before plating or soldering, and for initiating polymerization reactions. Other commercially available persulfate salts are ammonium persulfate and potassium persulfate; however, ammonium persulfate introduces objectionable ammonium ions into solution, while the solubility of potassium persulfate is much less than ammonium or sodium persulfate. Consequently, sodium persulfate is the preferred compound for some applications.

Sodium persulfate can be prepared by electrolysis of a solution containing sodium and sulfate ions according to U.S. Patent No. 4,127,456 and U.S. Patent No. 4,144,144, as well as by the reaction of sodium hydroxide with ammonium persulfate as taught by U.S. Patent No. 2,899,272 and U.S. Patent No. 3,954,952. The electrolytic processes yield a high quality product, but do not permit the flexibility of producing ammonium, sodium, and potassium persulfates utilizing the same electrolyte; processes based on the electrolytic production of ammonium persulfate optionally followed by metathesis to sodium and potassium persulfate and ammonia provide the desired flexibility of operation. However, none of these processes are completely satisfactory for the production of sodium persulfate.

The process disclosed by Flach et al in U.S. Patent No. 2,899,272 reacts aqueous solutions of ammonium persulfate and an alkali metal or alkaline earth hydroxide or carbonate at temperatures between 0°C and 45°C. Ammonia is removed from the reaction zone by vacuum stripping. The reaction solutions are held for over 24 hours in a crystallizer to provide time for the crystals to grow and the water and ammonia to be removed. This long residence time is a disadvantage because it allows the persulfate to react with ammonia to produce the corresponding alkali sulfate. The sulfate levels build up in the crystallizer mother liquor. Eventually, the alkali sulfate will precipitate with the persulfate or the alkali sulfate must be removed from the mother liquor, or if permitted, the liquor must be discarded.

Zumbrunn, in French Patent No. 1,493,723, teaches the isothermal reaction of solid sodium hydroxide or sodium carbonate with ammonium persulfate in a saturated sodium persulfate solution to produce crystalline sodium persulfate. Preferably, the reaction is maintained without cooling at temperatures of 15°C to 25°C with the ammonia and water formed by the process partially removed by passing air through the reaction solution. This patent also discloses that sodium sulfate builds up in the recirculated mother liquor and after 24—30 cycles can be removed by cooling to precipitate sodium sulfate decahydrate plus some sodium persulfate. If excess water builds up in the system, it is also removed at this time by adding anhydrous sodium sulfate to the system prior to cooling thus removing the water as the water of crystallization. Zumbrunn partially controls the loss of active oxygen due to hydrolysis by maintaining reaction temperatures at 15°C to 25°C.

Nevertheless, active oxygen is lost by crystallizing with sodium sulfate and by reacting with ammonia to produce sulfate and nitrogen gas. This loss of active oxygen and the periodic purification of the mother liquor add to the cost of the product by this process.

Hall et al in U.S. Patent No. 3,954,952 disclose a process for the production of sodium or potassium persulfate by continuously reacting a solution of the corresponding sodium or potassium hydroxide with a solution of slurry of ammonium persulfate. The reaction conditions are maintained at 15°C to 45°C, at atmospheric pressure and in the pH range of 11—13; the ammonia concentration in the reaction medium is kept below 6 weight percent at 25°C by air or inert gas stripping to avoid the formation of explosive mixtures with air. The product is recovered by spray drying or other conventional means. While the potassium persulfate produced by this method is satisfactory, the sodium persulfate tends to cake badly because of the greater solubility of sodium persulfate, which permits a greater buildup of by-product sodium sulfate from the side reaction with ammonia. The process results in a fine product which must be compacted and granulated to reduce its tendency to cake which is caused by the sodium sulfate in the product.

The present invention is a process for continuously making sodium persulfate from an aqueous mother liquor which is recycled and replenished by reacting solutions of ammonium persulfate and either sodium hydroxide or sodium carbonate. A slurry of sodium persulfate crystals is formed by cooling the mother liquor. Sodium persulfate crystals are extracted from a first part of the slurry while a second part is fed to a combined fines destruction loop and gas stripper which removes ammonia, as well as water vapor from the mother liquor. A third part of the mother liquor is diluted so that pure sodium sulfate decahydrate crystals are formed on further cooling and are removed to prevent a buildup of sodium sulfate in solution and coprecipitation with the product sodium persulfate.

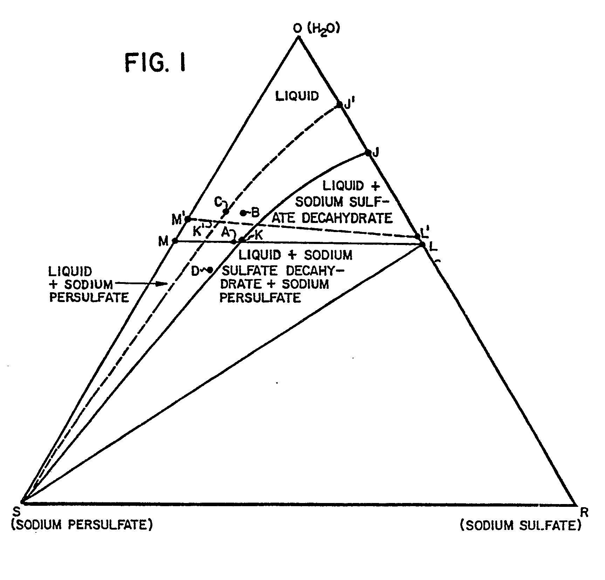

In the drawing, Figure 1 is a ternary phase diagram of the system: water, sodium persulfate, and sodium sulfate illustrating the phase relationships during the process of the present invention.

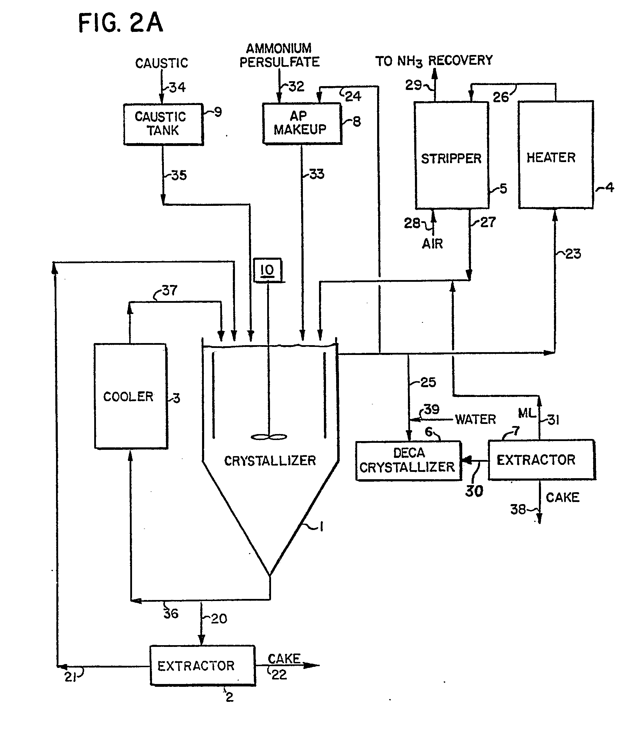

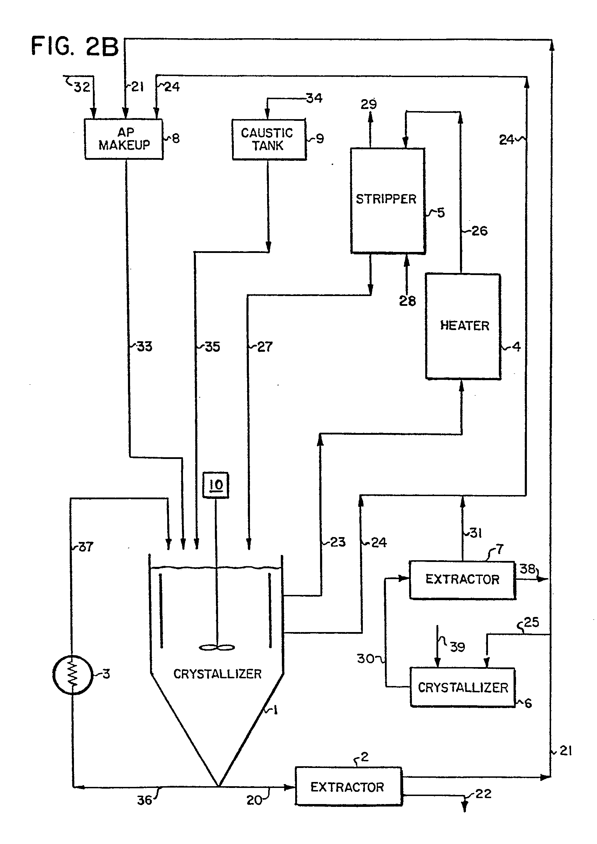

Figures 2A and 2B are flow diagrams of alternative embodiments of the process of the present invention.

Figure 1 includes two superimpsoed ternary phase diagrams of the system sodium persulfate (point S), sodium sulfate (point R), and water (point O). The compositions represented by letters without primes and solid lines are for the system at 25°C and represents in the general discussions, the temperature of the sodium persulfate crystallizer, T; the compositions represented by letters with primes and dashed lines are for the system at 15°C and represents in the general discussions, the temperature of the sodium sulfate crystallizer T'. The compositions within the areas OMKJ and O'M'K'J' are not in equilibrium with solid sodium persulfate or sodium sulfate phase at the temperature T or T' respectively. Compositions on the lines MK and M'K' are in equilibrium with sodium persulfate at temperatures T and T' respectively. Similarly, the compositions KJ and K'J' are in equilibrium with a sodium sulfate crystal at the temperatures T and T', and the sodium sulfate crystal will be sodium sulfate decahydrate at the temperature T'.

Figures 2A and 2B represent two of many possible embodiments of the apparatus of the invention. Both show a cooling crystallizer 1 with a stirrer 10, although an evaporation crystallizer would be satisfactory. The primary crystallizer loop involves line 36 carrying solution from the crystallizer to cooler 3 and back to the crystallizer 1 through line 37. Persulfate values are added to this loop by dissolving ammonium persulfate from line 32 in mother liquor from line 24 and feeding such enriched mother liquor to the primary crystallizer loop through line 33. Similarly, a base such as a solution sodium hydroxide or sodium carbonate is fed by line 34 into tank 9 and thence by line 35 into the primary crystallizer loop. Part of the slurry is fed from the primary crystallizer loop through line 20 to a centrifuge or filter 2 and returns the mother liquor directly or indirectly to the primary crystallizer loop through line 21 and conducts product sodium persulfate out of the system through line 22 to a conventional dryer or for subsequent use. Preferably, a separator or classifier should be used to divide the slurry into a coarse fraction to be used as feed to the centrifuge or filter 2 and a fine crystal fraction to be used as feed to the fines destruction and ammonia stripper and other loops, a combined fines destruction and ammonia stripper loop is shown as lines 23, 26, and 27 connecting a source of mother liquor, such as the crystallizer, a heater 4, and a gas stripper 5. The heat necessary to evaporate the ammonia from the solution also dissolves any crystals in warming the solution in heater 4 and air or any other gas introduced through line 28 strips ammonia and water vapor from solution. The ammonia is conducted by line 29 to a conventional ammonia recovery system while the deammoniated mother liquor is returned to the system through line 27.

The final loop is the sodium sulfate decahydrate crystallization loop which is physically shown operating as a subloop between lines 23 and 27 in Figure 2A or between line 21 and 24 in Figure 2B which comprises line 25 delivering mother liquor and line 39 delivering dilution water to a cooling crystallizer 6 operated at temperature T' thereby crystallizing a slurry of sodium sulfate decahydrate crystals. The slurry is conducted by line 30 to a filter or centrifuge 7 separating the slurry into a low sulfate mother liquor which is returned to the system by line 31 and the sodium sulfate decahydrate crystals for disposal through line 38.

It is obvious that the source of mother liquor for many of these loops could be wholly, or in part, supplied by other mother liquor sources. For example, line 24 feeding the ammonium persulfate make-up tank 8 could be fed from line 27, from the ammonia stripper 5. The particular arrangement of lines and tanks would, in practice, be dictated by the equipment and selected operating conditions. For example, an evaporation crystallizer with a fines destruction loop would combine the functions of the primary crystallizer loop and the combined fines destruction and stripper loop.

In operation, the persulfate values are replaced in the recirculating mother liquor by adding ammonium persulfate, preferably as a solid; the corresponding sodium values are provided by adding a solution sodium hydroxide or sodium carbonate, preferably 50% sodium hydroxide. At the temperature T, a slurry of sodium persulfate is formed; the composition of the slurry may be represented as a point D in the area SMK of Figure 1. The mother liquor will then have the composition represented by the point A on the line MK.

If no sulfate were present in the system, the points D and A would be on the line SO. However, the sulfate values will continuously increase either by being introduced as impurities in the raw materials or through the reaction of ammonia and persulfate to form nitrogen and sulfate. This results in a continued shifting of the points A and D towards the point K, and if uncorrected point A would fall on point K and crystals of sodium sulfate would be found in the product.

To avoid the formation of sodium sulfate crystals in the product, advantage is taken of the greater temperature coefficient of solubility of sodium sulfate decahydrate (0.66%/°C) compared to sodium persulfate (0.15%/°C). Water is added to part of the mother liquor or slurry to change the composition to that represented by point B which will be within the area J'K'L' when the solution is cooled to temperature T'. The solution will then comprise a slurry of sodium sulfate decahydrate crystals without any solid sodium persulfate and a mother liquor with the composition represented by the point C. By selecting the temperatures T and T' and the fraction of the mother liquor through the sodium sulfate decahydrate loop, it is possible to control the composition of the mother liquor A so that crystals of sodium sulfate never form in the sodium persulfate crystallizer.

To minimize the sodium sulfate in the system, it is necessary to have T' be almost at the freezing point of the solution (slightly below 0°C) and to maximize the fraction of the mother liquor passing through the sodium sulfate decahydrate loop. The maximum temperature for T' is 32°C, approximately the melting point of sodium sulfate decahydrate. The maximum operating temperature for the sodium persulfate crystallizer is about 35°C to minimize the decomposition of persulfate although temperatures of 45°C or even higher would be possible. A temperature difference of at least 5°C is the minimum practical temperature difference for the two crystallizers. Therefore, the temperature T' may range from 0°C to 32°C, while the temperature T may range from 5°C to 37°C. Preferably, for economy, temperature T' should be 10°C to 25°C, while the temperature T should be 20°C to 30°C varying according to the specific plant conditions available.

The operating conditions of the stripper loop are not critical except that it is undesirable for crystals of any solid phase to form in the stripper because of the potential for plugging. Crystallization could occur if too much water is evaporated from the solution, either because of too great a quantity of stripper gas or too high an inlet temperature of feed to the stripper; either cause would result in an excessive evaporation of water and crystal formation. The calculation of the optimum stripper gas flow and feed solution temperature of the stripper would be obvious to one skilled in the art and would depend on the specific plant conditions.

The water losses in the system are determined by the water removed from the system as water of crystallization of sodium sulfate decahydrate and the water evaporated by the stripper. The water balance is completed by the water of reaction and solution added by the sodium hydroxide or sodium carbonate, plus the water added in the sodium sulfate decahydrate loop.

Example 1

A laboratory scaie sodium sulfate decahydrate crystallizer was run for 6 hours at 11°C with a feed of synthetic mother liquor averaging 29.5% sodium persulfate and 8.37% sodium sulfate. The operating data are presented as Table I.

Example 2

Pilot production of sodium persulfate was run for 2 days producing 5 drums of sodium persulfate, over 360 kg, using a feed liquor containing 8.0% sodium sulfate and 32% sodium persulfate. The mother liquor was warmed to 40°C and enough ammonium persulfate dissolved to form a 20% ammonium persulfate solution. The mother liquor was reacted with 50% sodium hydroxide to adjust the pH to about 10—11 forming a 20% slurry of sodium persulfate. The sodium persulfate crystallizer was operated at 25°C. The assay and particle size distribution of the individual drums are presented as Table II.

Example 3

A pilot sodium sulfate decahydrate crystallizer was run for 44 hours at 15°C. The feed to the crystallizer was 6.3 $cm^3$/s water plus 61.2 $cm^3$/s of a solution at 25°C containing 32.09% sodium persulfate, 8.40% sodium sulfate, and 56.95% water. This was equivalent to 67.5 $cm^3$/s of a solution containing 32.09% sodium persulfate, 7.79% sodium sulfate, and 60.12% water. The total sodium sulfate decahydrate production was 1361 kg equivalent to 8.6 g/s average production (3.8 g/s $Na_2SO_4$ and 4.8 g/s water of crystallization). Only traces of sodium persulfate could be detected, which were attributed to the mother liquor wetting the crystals.

The feed solution without dilution would have produced 12.7 g/s crystals including 3.0 g/s sodium persulfate and 9.7 g/s sodium sulfate decahydrate.

## TABLE I

| Elapsed time hours | Crystallizer temp. °C | Feed | | Precipitate | | |
|---|---|---|---|---|---|---|
| | | %SP* | %SS* | %SP* | %SS* | Weight (g) |
| 0 | 10.5 | 28.9 | 8.0 | 4.5 | 45.2 | 37.4 |
| 1 | 11.0 | 28.8 | 8.3 | 2.8 | 44.6 | 35.5 |
| 2 | — | 29.5 | 8.3 | 3.1 | 44.4 | 76.2 |
| 3 | 11.2 | 29.8 | 8.5 | 0.3 | 46.4 | 46.5 |
| 4 | — | 30.1 | 8.5 | 1.0 | 43.8 | 62.2 |
| 5 | 11.5 | 29.8 | 8.6 | 0.7 | 45.7 | 57.4 |
| 6 | 11.2 | — | — | 1.4 | 46.2 | 131.2 |

## TABLE I (Continued)

| Elapsed time hours | Filtrate | | | Recycle weight (g) | Total weight (g) |
|---|---|---|---|---|---|
| | %SP* | %SS* | Weight (g) | | |
| 0 | 33.3 | 2.8 | 240.4 | — | 277.8 |
| 1 | 32.2 | 2.9 | 243.5 | 4,491 | 5,047.8 |
| 2 | 32.5 | 2.7 | 542.5 | 2,456 | 8,122.5 |
| 3 | 32.2 | 3.1 | 354.5 | 3,113 | 11,636.5 |
| 4 | 32.5 | 3.3 | 457.7 | 2,926 | 14,782.4 |
| 5 | 33.6 | 3.0 | 412.2 | 2,378 | 17,630.0 |
| 6 | 33.9 | 2.6 | 949.5 | 2,887 | 21,597.7 |

*SP=Sodium persulfate,
SS=Sodium sulfate.

## TABLE II

| Drum No. | Assay % | | | Particle size % retained on mesh | | | |
|---|---|---|---|---|---|---|---|
| | Sodium persulfate | Sodium sulfate | PPM ammonia | 600 μm | 300 μm | 212 μm | 150 μm |
| 1 | 99.63 | 0.63 | 23 | 1.2 | 52.2 | 88.9 | 98.0 |
| 2 | 99.16 | 0.95 | 9 | 3.3 | 38.8 | 83.2 | 97.4 |
| 3 | 99.13 | 0.88 | 77 | 1.5 | 39.9 | 87.6 | 96.4 |
| 4 | 99.46 | 0.75 | 23 | 0.3 | 29.3 | 88.1 | 98.4 |
| 5 | 99.46 | 0.80 | 26 | 0.2 | 19.5 | 81.0 | 98.1 |

## Claims

1. A process for continuously recovering sodium persulfate from an aqueous mother liquor which is recycled and replenished by introducing ammonium persulfate and a compound selected from the group consisting of sodium hydroxide and sodium carbonate which react to produce sodium persulfate and ammonia, the persulfate being in part reduced by the ammonia to form sodium sulfate, characterized by:

(a) removing heat from said mother liquor to maintain a temperature T at which the mother liquor is in equilibrium with sodium persulfate crystals forming a slurry of sodium persulfate crystals in said mother liquor,

(b) extracting sodium persulfate crystals from said mother liquor slurry from step (a), optionally the slurry of step (a) is separated into a fraction containing large crystals which fraction is fed to step (b) and a fraction containing fine crystals which fraction is fed to step (c),

(c) evaporating ammonia from a part of said mother liquor or slurry from step (a) or step (b) by:

(1) heating said mother liquor or slurry to provide the energy to evaporate said ammonia whereby any crystals are dissolved, and

(2) stripping said heated mother liquor to evaporate said ammonia whereby water vapor is also evaporated from the solution and the temperature of the solution drops,

(d) removing sodium sulfate from the system by:

(1) diluting a part of said mother liquor to a composition which will correspond in Figure 1 to a point B within the area J'K'L' after cooling step (d) (2),

(2) cooling the diluted mother liquor from step (d) (1) to the temperature T' at which sodium sulfate decahydrate crystals are formed, and

(3) extracting said sodium sulfate decahydrate crystals from said mother liquor.

2. The process of Claim 1 characterized by separating said slurry (a) into a fraction containing large crystals which fraction is fed to step (b) and a fraction containing fine crystals which fraction is fed to step (c).

3. The process of Claim 1 or 2 characterized in that the temperature T is in the range of 15°C to 35°C and the temperature T' is in the range of 0°C to 30°C.

4. The process of Claim 3 characterized in that the temperature T is in the range of 20°C to 30°C and the temperature T' is in the range of 15°C to 20°C.

5. The process of any of claims 1—4 characterized in that step (a) is accomplished in a stirred crystallizer and step (d)(2) is accomplished in a cooled crystallizer.

6. The process of any of claims 1—5 characterized by:

(a) removing heat by means of a stirred crystallizer from mother liquor to maintain a temperature of 20°C to 30°C at which said mother liquor is in equilibrium with sodium persulfate crystals forming a slurry of sodium persulfate in said mother liquor,

(b) separating the slurry into a fraction containing coarse crystals and a fraction containing fine crystals,

(c) extracting the sodium persulfate crystals from the mother liquor fraction from step (b) containing coarse crystals,

(d) evaporating ammonia from the fraction from step (b) containing fine crystals by:

(1) heating said mother liquor fraction to provide the energy to evaporate said ammonia whereby any crystals are dissolved, and

(2) stripping said heated mother liquor with an inert gas whereby water vapor is also evaporated from the solution and the temperature of the solution drops, and

(e) removing sodium sulfate from the system by:

(1) diluting a part of said mother liquor from (b) containing fine crystals to a composition which will correspond in Figure 1 to a point B within the area J'K'L' after cooling step (e)(2),

(2) cooling the diluted mother liquor from step (d)(1) to a temperature of 15°C to 20°C at which sodium sulfate decahydrate crystals are formed, and

(3) extracting said sodium sulfate decahydrate crystals from said mother liquor.

7. The process of any of claims 1—6 characterized in that the ammonium persulfate is added as a solid.

## Patentansprüche

1. Verfahren zur kontinuierlichen Gewinnung von Natriumpersulfat aus einer wässrigen Mutterlauge, die im Kreislauf geführt und ergänzt wird durch Einbringen von Ammoniumpersulfat und einer Verbindung, die ausgewählt ist aus der aus Natriumhydroxid und Natriumcarbonat bestehenden Gruppe, welche unter Bildung von Natriumpersulfat und Ammoniak reagieren, wobei das Persulfat teilweise durch das Ammoniak unter Bildung von Natriumsulfat reduziert wird, gekennzeichnet durch:

(a) Ableiten von Wärme aus der Mutterlauge, um eine Temperatur T aufrechtzuerhalten, bei der die Mutterlauge im Gleichgewicht mit Natriumpersulfatkristallen ist, die eine Aufschlämmung von Natriumpersulfatkristallen in der Mutterlauge bilden,

(b) Extrahieren von Natriumpersulfatkristallen aus der Mutterlaugenaufschlämmung von Stufe (a), wobei gegebenenfalls die Aufschlämmung von Stufe (a) aufgetrennt wird in eine Fraktion, die grosse Kristalle enthält und zur Stufe (b) geführt wird, und eine Fraktion, die feine Kristalle enthält und zur Stufe (c) geführt wird,

(c) Abdampfen von Ammoniak aus einem Teil der Mutterlauge oder Aufschlämmung von Stufe (a) oder Stufe (b) durch:

(1) Erhitzen der Mutterlauge oder Aufschlämmung zum Zwecke der Energiezufuhr, um das Ammoniak zu verdampfen, wodurch etwaige Kristalle gelöst werden, und

(2) Strippen der erhitzten Mutterlauge, um das Ammoniak abzudampfen, wobei auch Wasserdampf aus der Lösung abdampft und die Temperatur der Lösung sinkt,

(d) Entfernen von Natriumsulfat aus dem System durch:

(1) Verdünnen eines Teils der Mutterlauge auf eine Zusammensetzung, die in Fig. 1 einem Punkt B innerhalb des Bereiches J'K'L' nach der Kühlstufe (d)(2) entspricht,

(2) Abkühlen der verdünnten Mutterlauge aus Stufe (d)(1) auf eine Temperatur T', bei der Natriumsulfat-dekahydrat-Kristalle gebildet werden, und

(3) Extrahieren der Natriumsulfat-dekahydrat-Kristalle aus der Mutterlauge.

2. Verfahren nach Anspruch 1, gekennzeichnet durch Auftrennen der Aufschlämmung (a) in eine Fraktion, die grosse Kristalle enthält und zur Stufe (b) geführt wird, und eine Fraktion, die feine Kristalle enthält und zur Stufe (c) geführt wird.

3. Verfahren nach Anspruch 1 oder 2, dadurch gekennzeichnet, dass die Temperatur T im Bereich von 15°C bis 35°C und die Temperatur T' im Bereich von 0°C bis 30°C liegt.

4. Verfahren nach Anspruch 3, dadurch gekennzeichnet, dass die Temperatur T im Bereich von 20°C bis 30°C und die Temperatur T' im Bereich von 15°C bis 20°C liegt.

5. Verfahren nach irgendeinem der Ansprüche 1 bis 4, dadurch gekennzeichnet, dass die Stufe (a) in einem gerührten Kristallisator und die Stufe (d)(2) in einem gekühlten Kristallisator durchgeführt wird.

6. Verfahren nach irgendeinem der Ansprüche 1 bis 5, gekennzeichnet durch:

(a) Ableiten von Wärme aus der Mutterlauge mit Hilfe eines gerührten Kristallisators, um eine Temperatur von 20°C bis 30°C aufrechtzuerhalten, bei der die Mutterlauge im Gleichgewicht mit Natriumpersulfatkristallen ist, die eine Aufschlämmung von Natriumpersulfat in der Mutterlauge bilden,

(b) Auftrennen der Aufschlämmung in eine Fraktion, die grobe Kristalle enthält, und eine Fraktion, die feine Kristalle enthält,

(c) Extrahieren der Natriumpersulfatkristalle aus der Mutterlaugenfraktion von Stufe (b), die grobe Kristalle enthält,

(d) Abdampfen von Ammoniak aus der Fraktion von Stufe (b), die feine Kristalle enthält, durch:

(1) Erhitzen der Mutterlaugenfraktion zum Zwecke der Energiezufuhr, um das Ammoniak abzudampfen, wobei etwaige Kristalle gelöst werden, und

(2) Strippen der erhitzten Mutterlauge mit einem Inertgas, wobei auch Wasserdampf aus der Lösung abdampft und die Temperatur der Lösung sinkt, und

(e) Entfernen von Natriumsulfat aus dem System durch:

(1) Verdünnen eines Teils der Mutterlauge von (b), die feine Kristalle enthält, auf eine Zusammensetzung, die in Fig. 1 einem Punkt B innerhalb des Bereiches J'K'L' nach der Kühlstufe (e)(2) entspricht,

(2) Abkühlen der verdünnten Mutterlauge von Stufe (d)(1) auf eine Temperatur von 15°C bis 20°C, bei der Natriumsulfat-dekahydrat-Kristalle gebildet werden, und

(3) Extrahieren der Natriumsulfat-dekahydrat-Kristalle aus der Mutterlauge.

7. Verfahren nach irgendeinem der Ansprüche 1 bis 6, dadurch gekennzeichnet, dass das Ammoniumpersulfat als Feststoff zugesetzt wird.

**Revendications**

1. Un procédé pour la récupération en continu du persulfate de sodium à partir d'une liqueur mère aqueuse qui est recyclée et remplie par introduction de persulfate d'ammonium et d'un composé choisi dans le groupe composé d'hydroxyde de sodium et de carbonate de sodium qui réagit pour produire le persulfate de sodium et l'ammoniaque, le persulfate étant en partie réduit par l'ammoniaque pour former du sulfate de sodium, caractérisé par:

(a) l'élimination de chaleur de ladite liqueur mère pour maintenir une température T à laquelle la liqueur mère est en équilibre avec les cristaux de persulfate de sodium formant une boue de cristaux de persulfate de sodium dans ladite liqueur mère,

(b) l'extraction de cristaux de persulfate de sodium de ladite boue de liqueur mère de la phase (a) éventuellement la boue de la phase (a) est séparé en une fraction contenant des cristaux plus gros dont la fraction est envoyée à la phase (b) et une fraction contenant les cristaux fins qui est une fraction envoyée à la phase (c),

(c) l'évaporation de l'ammoniaque d'une partie de ladite liqueur mère ou de la boue de la phase (a) ou de la phase (b) par:

(1) chauffage de ladite liqueur mère ou de la boue pour fournir l'énergie pour évaporer ladite ammoniaque pour dissoudre tous les cristaux, et

(2) décapage de ladite liqueur mère réchauffée pour évaporer ladite ammoniaque ce qui fait que la vapeur d'eau est également évaporée de la solution et la température de la solution baisse,

(d) élimination du sulfate de sodium du système par:

(1) dilution d'une partie de ladite liqueur mère en une composition qui correspond dans la figure 1 à un point B dans la zone J'K'L' après l'étape de refroidissement (2) refroidissement de la liqueur mère diluée de la phase (d)(1) à la température T' à laquelle les cristaux de décahydrate de sulfate de sodium sont formés,

(3) extraction desdits cristaux de décahydrate de sulfate de sodium de ladite liqueur mère.

2. Procédé de la revendication 1, caractérisé par la séparation de ladite boue (a) en une fraction contenant des gros cristaux, cette fraction est envoyée à la phase (b) et une fraction contenant des cristaux fins envoyée à la phase (c).

3. Le procédé de la revendication 1 ou 2, caractérisé par le fait que la température T est dans la gamme de 15°C à 35°C et la température T' dans la gamme de 0°C à 30°C.

4. Le procédé de la revendication 3, caractérisé par le fait que la température T est dans la gamme de 20°C à 30°C et la température T' est dans la gamme de 15°C à 20°C.

5. Le procédé de l'une ou l'autre des revendications 1—4, caractérisé par le fait que la phase (a) est accompli dans un cristalliseur à agitation et la phase (d)(2) est accompli dans un cristalliseur refroidi.

6. Le procédé de l'une ou l'autre des revendications 1—5 est caractérisé par:

(a) l'élimination de la chaleur au moyen d'un cristalliseur à agitation de ladite liqueur mère pour maintenir une température de 20°C à 30°C à laquelle ladite liqueur mère est en équilibre avec les cristaux de persulfate de sodium formant une boue de persulfate de sodium dans ladite liqueur mère,

(b) la séparation de la boue dans une fraction contenant des cristaux grossiers et une fraction de cristaux fins,

(c) l'extraction de cristaux de persulfate de sodium d'une fraction de liqueur mère de la phase (b) contenant des cristaux grossiers,

(d) l'évaporation de l'ammoniaque d'une fraction de la phase (b) contenant des cristaux fins en effectuant

(1) le chauffage de ladite fraction de liqueur mère pour fournir l'énergie pour évaporer ladite ammoniaque de sorte que tous les cristaux soient dissous, et

(2) le strippage de ladite liqueur mère chauffée avec un gaz inerte de sorte que la vapeur d'eau est également évaporée de la solution et la température de la solution baisse, et

(e) l'élimination du sulfate de sodium du système en effectuant:

(1) la dilution d'une partie de ladite liqueur mère de (b) contenant les cristaux fins à une composition qui correspond sur la figure 1 à un point P dans la zone J'K'L' après la phase (e) de refroidissement,

(2) le refroidissement de la liqueur diluée de la phase (d)(1) à une température de 15°C à 20°C à laquelle les cristaux de décahydrate de sodium sont formés, et

(3) l'extraction desdits cristaux de décahydrate de sulfate de sodium de la liqueur mère.

7. Le procédé de l'une ou l'autre des revendications 1—6, caractérisé dans le fait que le persulfate d'ammonium est ajouté à l'état solide.

FIG. I

## FIG. 2A

CAUSTIC

AMMONIUM
PERSULFATE

TO NH₃ RECOVERY

34

32

29

26

CAUSTIC
TANK ⌐9

AP
MAKEUP ⌐8

24

STRIPPER

HEATER

35

33

5

4

28⌐
AIR

27

23

10

37

COOLER ⌐3

25

39 WATER ML⌐31

CRYSTALLIZER

6

7

DECA
CRYSTALLIZER ◄ EXTRACTOR

30

CAKE

1

38⌐

36 ⌐20

21⌐

EXTRACTOR CAKE►

2 22

# FIG. 2B